Europäisches Patentamt

(19) European Patent Office

Office européen des brevets

(11) Publication number: **0 268 574**
**A1**

# EUROPEAN PATENT APPLICATION

(21) Application number: 87870150.7

(22) Date of filing: 30.10.87

(51) Int. Cl.⁴: **A 01 N 57/20**
A 01 N 25/30, A 01 N 25/04
//(A01N57/20,47:30,43:70)

(30) Priority: 03.11.86 GB 8626246

(43) Date of publication of application:
25.05.88 Bulletin 88/21

(84) Designated Contracting States:
BE CH DE ES FR GB GR IT LI NL

(71) Applicant: **Monsanto Europe S.A.**
**Avenue de Tervuren 270-272 Letter Box 1**
**B-1150 Brussels (BE)**

(72) Inventor: **Henriet, Michel Maurice**
**19 rue Octave Lotin**
**B-5861 Cortil-Noirmont (BE)**

**Mitchell, Robert William**
**Robijnlaan 1**
**B-1900 Overijse (BE)**

(74) Representative: **Lunt, John Cooper et al**
**Monsanto Europe S.A. Patent Department Avenue de**
**Tervuren 270-272 Letter Box No 1**
**B-1150 Brussels (BE)**

(54) **Compositions containing glyphosate, simazine and diuron.**

(57) Compositions comprising, in an aqueous medium, (a) a water-soluble salt of glyphosate having water solubility such that the composition contains at least 70 g/l of glyphosate acid equivalent;

(b) simazine, and (c) diuron as particulate solids substantially free from particles having sizes greater than 15 μm;

(d) a surfactant which is a phosphoric ester of an ethoxylated aralkylated phenol in an amount of from 5 to 15% of the combined weight of the simazine and diuron;

(e) a surfactant in an amount of at least 40% of the combined weight of the simazine and diuron, and which is (i) an ethoxylated $C_{8-18}$ alkanoyl ester of sorbitan and/or (ii) an ethoxylated $C_{14-20}$ alcohol; and

(f) a water-soluble/water-dispersible thickener in an amount such that the composition has a viscosity at 25°C within the range 200 to 3500 cps;

wherein the weight ratios of components (a) (expressed as glyphosate acid equivalent), (b) and (c) are from 1.0:0.8:1.3 to 1.0:1.25:3.5,

are effective herbicides against a range of weeds and have good storage stability.

EP 0 268 574 A1

**Description**

COMPOSITIONS CONTAINING GLYPHOSATE, SIMAZINE AND DIURON

This invention relates to compositions containing water-soluble salts of glyphosate, simazine and diuron.

The use of more than one herbicide is often necessary for the control or eradication of weeds in particular situations. Water-soluble salts of N-phosphonomethylglycine (N-phosphonomethylglycine is herein referred to as glyphosate) are contact herbicides which are very effective in killing existing vegetation, but are non-persistent, so that other residual herbicides may be required to provide season-long control. 2-Chloro-4,6-ethylamino-s-triazine) and 3-(3,4-dichlorophenyl)-1,1-dimethylurea (herein referred to as simazine and diuron respectively), are examples of such residual herbicides, simazine being used to control certain annual broadleaf weeds and grasses, and diuron to control broadleaf species that are resistant to simazine.

The various herbicides can, if desired, be applied sequentially or by "tank mixing" the individual herbicides immediately prior to application. However, it is more convenient for the user to have available a pre-mixed concentrate containing all the herbicides in the optimum proportions, and which can be diluted, as and when required, to provide sprayable formulations.

To be commercially acceptable, it is essential that such concentrates should have long shelf lives. This means that there must be no significant chemical interaction between the components of the concentrate, and also that there must be no more than a minimum of physical separation of the components of a multi-phase mixture on storage, and that homogeneity is restorable, if necessary, simply by shaking the container. A further requirement for a commercially acceptable product is that the concentrate must be easily dispersible in water to provide agglomerate-free, sprayable herbicide compositions of any desired herbicide concentration.

The successful production of such concentrates is rarely straightforward, particularly where the concentrate is a dispersion of solids in a liquid. This is the situation in the present invention, where simazine and diuron are solids while the commercial forms of glyphosate are aqueous solutions of a water-soluble salt.

The present invention provides concentrated compositions meeting the above requirements for commercial acceptability.

A composition of the invention comprises, in an aqueous medium, (a) a water-soluble salt of glyphosate having water solubility such that the composition contains at least 70 grams/litre of glyphosate acid equivalent;

(b) simazine, and (c) diuron as particulate solids substantially free from particles having sizes greater that 15 $\mu$m;

(d) a surfactant which is a phosphoric ester of an ethoxylated aralkylated phenol in an amount of from 5 to 15% of the combined weight of the simazine and diuron;

(e) a surfactant in an amount of at least 40% of the combined weight of the simazine and diuron, and which is (i) an ethoxylated $C_{8-18}$ alkanoyl ester of sorbitan, and/or (ii) an ethoxylated $C_{14-20}$ alcohol;

(f) a water-soluble/water-dispersible thickener in an amount such that the composition has a viscosity at 25°C within the range 200 to 3500 cps;

wherein the weight ratios of components (a) (expressed as glyphosate acid equivalent), (b) and (c) are from 1.0:0.8:1.3 to 1.0:1.25:3.5.

Out of many surfactants evaluated in attempts to produce a stable aqueous dispersion of simazine and diuron, only surfactants of the class (d) as described above were found to be suitable. Slight modification, even to the extent of neutralising residual acidity in the phosphoric ester with triethanolamine, was found to give an unsatisfactory product. Other classes of surfactant, many which are recommended for use in suspension concentrate formulations, were also unsuitable. These included ethoxylated/propyloxylated block copolymers of $C_{4-8}$ alcohols, and mixtures of sodium naphthalene sulphonate/formaldehyde condensates with anionic wetting agents.

Similarly, no other class of surfactant was found which could be used instead of those of class (e) above. Those investigated included several which are known to be effective as suspension stabilisers and/or as enhancers of glyphosate activity, for example amine salts of long-chain alkyl sulphates and ethoxylated fatty amines. However, such other surfactants need not be excluded, but preferably the surfactant as defined under (e) constitutes a major component of any combination with such other surfactant or surfactants.

Water-soluble salts of glyphosate which can be used in the compositions of the invention include the alkali metal salts, for example sodium salts, trialkylsulphonium salts, for example trimethylsulphonium, and amine salts, for example salts of glyphosate with dimethylamine, isopropylamine or ethylenediamine. The mono(isopropylamine) salt is particularly suitable.

Simazine and diuron are both commercially available as technical grades having active ingredient contents of about 94-98%. No purification of such technical grades is necessary for their own use in the present invention, but normally particle size reduction is required.

Surfactant (d) is a phosphoric ester of an ethoxylated aralkylated phenol. Within this class of surfactants, the esters can vary in a number of ways, for example, in the degree of ethoxylation (i.e. the number of ethyleneoxide units in the poly-(oxyethylene) group), and in the nature and number of aralkyl groups. In practice, commercial products of this type are mixtures, so that it is more accurate to describe the numerical features in terms of average numbers or ranges of numbers rather than integers. Thus the average degree of ethoxylation of surfactants (d) may be from about 12 to about 24; in the present invention, surfactants (d) having an average degree of ethoxylation of from 16 to 20 are generally preferred. Similarly, a surfactant (d) which may be described by the manufacturer as di(aralkylated) has in fact a predominance of di(aralkylated) phenol groups, but mono- and tri(aralkylated) species will also be present. In this sense, for the present invention, surfactants (d) which are derivatives of phenols which are at least di(aralkylated), are preferred. The usual aralkyl group is alpha-methyl-benzyl (derived from styrene) but surfactants where the aralkyl group is benzyl will be functionally satisfactory. A surfactant of this class which has been found to have especially good performance in the compositions of the present invention is Soprophor® 3D33, manufactured by Rhône-Poulenc, and described as a phosphoric ester of an ethoxylated (range of ethoxylation 16-20) tri(styrenated)phenol.

Surfactant (d) is preferably used in conjunction with (d') a dispersing agent which is an acrylic acid/acrylic ester copolymer neutralised with an alkanolamine such as diethanolamine or triethanolamine. The acrylic ester monomer from which the copolymer is derived is usually methyl acrylate or ethyl acrylate. Copolymers in which at least part of the acrylic acid and/or ester is replaced by methacrylic acid and/or ester are also within the scope of component (d'). A particularly suitable dispersing agent of this type for use in the present invention is Soprophor® DA manufactured by Rhône-Poulenc and described as an acrylic acid/acrylic ester copolymer neutralised with triethanolamine.

The amount of surfactant (d), or the combined amounts of components (d) and (d') when both are used, is generally from 5 to 15% and preferably from 8 to 12%, of the combined weight of simazine and diuron. When (d) is used alone, the optimum amount may be slightly higher than the optimum amount for a combination of (d) and (d'). In the latter instance, the weight ratio of (d) to (d') is preferably not less than 1.5:1, and best results are usually obtained within the ratio range 2:1 to 4:1.

Regarding the surfactants of class (e)(i) the ethoxylated $C_{8-18}$ alkanoyl monoesters of sorbitan are especially useful, although the presence of a certain amount of di- or higher esters need not be avoided. Like the surfactants (d), the commercially available materials of category (e)(i) are mixtures, each containing compounds with a narrow range of values for the degree of ethoxylation, and usually for the number of carbon atoms in the alkanoyl group. The average value for the degree of ethoxylation in surfactants (e)(i) useful in the present invention may, for example, vary from about 15 to about 25, each average being that of a mixture containing compounds having degrees of ethoxylation of perhaps about 3, on each side of the average. The alkanoyl group may be, for example, a $C_{10-16}$ alkanoyl group, examples of which are caproyl, lauroyl, myristoyl and palmitoyl; surfactants containing mixtures of such alkanoyl groups can be used. A particularly effective surfactant of this class is Tween® 20 (ICI) described as a 20 mol ethoxylated sorbitan monolaurate. Radiasurf® 7137 (Oleofina) is a similar product.

Examples of the surfactants of class (e)(ii) are ethoxylated derivatives of tetradecanol, hexadecanol cetyl, and stearyl alcohols, and mixtures of such derivatives. Products having a relatively high degree of ethoxylation are preferred for use in the invention, for example in the range 40 to 60. Good results have been obtained with the surfactant Empilan Km50, described as an ethoxylated cetyl/stearyl alcohol mixture having an average degree of ethoxylation of 50.

In the present invention, the surfactants of class (e) have a dual function of contributing to the stability of the composition and of counteracting an antagonism in herbicidal activity between glyphosate and the other herbicides, especially diuron. The quantity of surfactant (e) used is primarily related to the amounts of simazine and diuron in the composition. It should normally be at least 40%, and is preferably within the range 50% to 80% of the combined weight of the simazine and diuron. Larger amounts of surfactant (e) than this can be used, but they do not significantly further enhance the stability of the composition or the anti-antagonism effect.

Water soluble/dispersible thickeners of various classes are suitable for use in the present compositions. Many such thickeners are cellulose derivatives, especially hydroxyethyl or hydroxypropyl derivatives of cellulose or methylcellulose. Examples are Methocel F4M (Dow Chemical Co.) which is a hydroxypropyl methylcellulose derivative, and Cellosize QP 10000 H (Union Carbide) which is a hydroxyethyl cellulose derivative. Also suitable are xanthate gum polysaccharides, especially those that are anionic, for example Rhodopol 23 (Rhône-Poulenc). Preferred amounts of thickeners are amounts corresponding to composition viscosities within the range 600 to 1200 cps at 25°C.

The optimum viscosity depends on various factors, including the particle size characteristics of the simazine and diuron. As indicated above, the composition should be substantially free of particles having a size greater than 15 μm. Preferably, at least 95% of the particles are less than 10 μm, and at least 75% less than 6 μm. Compositions having a mean particle size not greater than 7 μm, for example in the range 2 to 5 μm, have been found to have excellent long-term storage stability.

Compositions of the invention that are likely to encounter low temperatures during storage or use, will contain an anti-freeze additive as an additional component. The required amount is typically from 2 to 10% of the weight of the composition. Suitable anti-freeze additives are ethylene glycol, diethylene glycol and propylene glycol.

The compositions of the invention also usually contain a small quantity, for example up to 0.5% of the total weight of the composition, of a defoamer. Most commercially available defoamers are silicone derivatives, for example Wacker SRE manufactured by Wacker Chemie and Rhodorsil 454 (Rhône-Poulenc), but others are available.

Preferred compositions of the invention contain the water-soluble salt of glyphosate at a concentration equivalent to at least 100 g/l of glyphosate acid. The upper limit depends on various factors, for example the particular salt used and the amounts of simazine and diuron which are to be included in the composition. Where the glyphosate salt is the mono(isopropylamine) salt, for example, the solubility of the glyphosate salt is not in itself a limiting factor on how much can be included in the composition. The limit is imposed by the condition that the composition must contain from 0.8 to 1.25 parts by weight of simazine and from 1.3 to 3.5 parts by weight of diuron per part by weight of glyphosate acid equivalent.

The upper limit in practice for the combined simazine/diuron concentration is about 400 g/l, which at the lower simazine/diuron end of the above ratio range corresponds to about 190 g/l of glyphosate acid equivalent. The preferred compositions containing at least 100 g/l of glyphosate acid equivalent will therefore contain less simazine and/or diuron than the amount arithmetically permitted by the upper end of the above ratio range. Particularly useful are compositions containing 100-130 g/l of glyphosate acid equivalent and 250-300 g/l total simazine and diuron, with the simazine and diuron present in a weight ratio within the range 1:1.5 to 1:2.0.

In a preferred method for the production of the compositions of the invention, the preparation is carried out in various steps as follows. In the first, (A), the required quantities of simazine and diuron are mixed with surfactant (d), or with the mixture (d) and (d'), and water. If an anti-freeze agent is to be included in the composition, it is conveniently added at this stage. The addition of a defoamer is also desirable. In step (B) the mixture from (A) is wet-milled and homogenised using wet grinding equipment such as a Dyno mill until the solids have been reduced to the required particle size. In step (C) at least part of the thickening agent is then added to the milled suspension to stabilise the suspension and adjust the viscosity. In the next step (D), the thickened suspension from (C) is mixed with an aqueous solution of the required water-soluble glyphosate salt and with the surfactant (e). In a preferred procedure, the suspension is added gradually to the stirred aqueous solution, followed by the surfactant.

The amount of water used in (A) and the concentration of the aqueous solution of glyphosate salt used in (D) is such that the concentrations of the various components at the completion of stage (D) are no less than those required in the finished composition. If necessary, therefore, the concentrations can be reduced by mixing the suspension from (D) with water. Similarly, the amount of thickener used in step (C) is such that if necessary, more can be added in a step (E), which may also include the addition of more defoamer.

Optional additional ingredients which can be incorporated in the compositions of the invention in small amounts include for example biocides, dyes and anti-corrosion agents.

The compositions of this invention are readily pourable and are easily dispersed in water. They can be diluted on site with water to provide agglomerate-free sprayable formulations of recommended concentration for weed control.

The invention is illustrated by the following Examples:

Example 1

The following ingredients were mixed and then wet milled in a Dyno Mill:

| Ingredient | Parts by Weight |
|---|---|
| Technical simazine[1] | 18.78 |
| Technical diuron[2] | 32.60 |
| Surfactant d (i)[3] | 3.60 |
| Surfactant d (ii)[4] | 1.10 |
| Ethylene glycol | 8.50 |
| Silicone Defoamer | 0.10 |
| Water | 30.32 |

(1) 97% active

(2) 95% active

(3) Soprophor 3D33

(4) Soprophor DA

The particle size distribution of the product was <3 μm, 53%; <6 μm, 89%; <10 μm, 99%; <15 μm, 100%. Mean particle size (Coulter Counter) 2.8 μm.

A water-soluble thickening agent Methocel F4M (5.0 parts by weight), was then added to milled product in a separate vessel.

4

In the second stage of the process, the fluid suspension mixture from the first stage was blended by stirring into a 62% by weight solution of the mono(isopropylamine) salt of glyphosate (IPAG solution) diluted with water in an amount required to give the concentrations of glyphosate acid equivalent, simazine and diuron shown below for the final composition. With continued stirring, Tween 20 surfactant and a small additional amount of silicone defoamer were added. The quantities of materials in the second stage were:

|  | Parts by weight |
|---|---|
| IPAG solution | 47.60 |
| Water | 30.12 |
| First stage suspension | 100.00 |
| Tween 20 | 30.23 |
| Silicone defoamer | 0.63 |

The final product had a specific gravity of 1.15, and the concentrations of the herbicidal ingredients were approximately: 120 g/l glyphosate (as glyphosate acid), 100 g/l simazine, 170 g/l diuron. These concentrations correspond to weight ratios of 1.0:0.83:1.42.

The finished formulation is stable at temperatures from -10° to +40°C over periods of several months and for 2 years at room temperature.

Example 2

By a procedure similar to that of Example 1, a first stage suspension was prepared from the following ingredients:

|  | Parts by weight |
|---|---|
| Technical simazine | 18.78 |
| Technical diuron | 32.94 |
| Soprophor 3D33 | 3.50 |
| Soprophor DA | 1.10 |
| Ethylene glycol | 7.20 |
| Rhodopol 23 | 3.20 |
| Silicone defoamer | 0.10 |
| Water | 33.18 |

The particle size distribution was the same as in Example 1.

In the second stage, the fluid suspension mixture (100 parts by weight) was added with stirring to:

|  | Parts by weight |
|---|---|
| IPAG solution 62% w/w | 40.1 |
| Water | 37.1 |
| Tween 20 | 30.1 |
| Silicone defoamer | 0.6 |

The final product had a specific gravity of 1.14 and the concentrations of the herbicidal components were approximately 100 g/l glyphosate (in terms of glyphosate acid), 100 g/l simazine, 175 g/l diuron. These concentrations correspond to weight ratios of 1.0:1.0:1.75.

The finished formulation is stable at temperatures from -10° to +40°C over periods of several months and for 2 years at room temperature.

# 0 268 574

## Claims

1. A composition comprising, in an aqueous medium,

(a) a water-soluble salt of glyphosate having water solubility such that the composition contains at least 70 g/l of glyphosate acid equivalent;

(b) simazine, and (c) diuron as particulate solids substantially free from particles having sizes greater than 15 μm;

(d) a surfactant which is a phosphoric ester of an ethoxylated aralkylated phenol in an amount of from 5 to 15% of the combined weight of the simazine and diuron;

(e) a surfactant in an amount of at least 40% of the combined weight of the simazine and diuron, and which is (i) an ethoxylated $C_{8-18}$ alkanoyl ester of sorbitan and/or (ii) an ethoxylated $C_{14-20}$ alcohol; and

(f) a water-soluble/water-dispersible thickener in an amount such that the composition has a viscosity at 25°C within the range 200 to 3500 cps;

wherein the weight ratios of components (a) (expressed as glyphosate acid equivalent), (b) and (c) are from 1.0:0.8:1.3 to 1.0:1.25:3.5.

2. A composition according to Claim in which the water-soluble salt of glyphosate is the mono(isopropylamine) salt which is present in an amount such that the composition contains 100-130 g/l of glyphosate acid equivalent and 250-300 g/l total simazine and diuron, with the simazine to diuron weight ratio being within the range 1:1.5 to 1:2.0.

3. A composition according to either of Claims 1 and 2 which also contains a dispersing agent (d') which is an acrylic acid/acrylic ester copolymer neutralised with an alkanolamine, the combined amount of the surfactant (d) and the dispersing agent (d') being from 5 to 15% of the combined weight of the simazine and diuron.

4. A composition according to Claim 3 in which the surfactant (d) is a phosphoric ester of an ethoxylated styrenated phenol having an average degree of ethoxylation of from 16 to 20 and an average of at least 2 styryl groups per phenol nucleus, dispersing agent (d') is an acrylic acid/acrylic ($C_{1-2}$ alkyl) ester copolymer neutralised with triethanolamine, the combined amount of components (d) and (d') is from 8 to 12% of the combined weight of the simazine and diuron, and the weight ratio of (d) to (d') is within the range 2:1 to 4:1.

5. A composition according to either of Claims 3 and 4 in which surfactant (e) is an ethoxylated $C_{10-16}$ alkanoyl monoester of sorbitan having an average degree of ethoxylation of from 15 to 25 and is present in an amount of from 50% to 80% of the combined weight of simazine and diuron.

6. A composition according to any of Claims 1 to 5 in which the water-soluble/water-dispersible thickener is a hydroxyalkyl derivative of cellulose or methylcellulose, and is present in an amount such that the composition has a viscosity at 25°C within the range 600 to 1200 cps.

7. A composition according to any of Claims 1 to 6 in which at least 95% of the simazine and diuron particles have a size less than 10 μm and the mean particle size is not greater than 7 μm.

8. A composition according to any of Claims 1 to 7 which also contains 2 to 10% of the weight of the composition of an anti-freeze additive.

9. A composition according to any of Claims 1 to 8 which also contains up to 0.5% of the weight of the composition of a defoamer.

10. A process for the production of a composition according to Claim 1, which comprises

(A) mixing the required quantities of simazine and diuron with the surfactant (d) and water, optionally with the addition of an anti-freeze agent and a defoamer,

(B) wet-milling the mixture thus formed until the solids have been reduced to the required particle size

(C) mixing the milled suspension from (B) with at least part of the thickener,

(D) mixing the thickened suspension with an aqueous solution of water-soluble glyphosate salt and with surfactant (e)

(E) if necessary, mixing the suspension from (D) with additional water and/or thickener to adjust the concentration and/or viscosity of the composition to required values.

11. A process according to Claim 10, wherein, in step (A), the simazine and diuron are mixed with surfactant (d) and dispersing agent (d').

12. A process according to either of Claims 10 and 11, wherein, in step (D), the suspension from (C) is added gradually to a stirred aqueous solution of the water-soluble glyphosate salt, followed by surfactant (e).

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 130 370 (HOECHST) <br> * Page 2, line 10 - page 4, line 8; example 1; claims * <br> --- | 1-12 | A 01 N 57/20 <br> A 01 N 25/30 <br> A 01 N 25/04 // <br> (A 01 N 57/20 <br> A 01 N 47:30 <br> A 01 N 43:70 ) |
| A | EP-A-0 088 049 (CIBA-GEIGY) <br> * Page 5, lines 1-29; example; claims * <br> --- | 1-12 | |
| A | EP-A-0 163 598 (CIBA-GEIGY) <br> * Claims 1-3,5,7,10-15 * <br> ----- | 1-12 | |

TECHNICAL FIELDS SEARCHED (Int. Cl.4)

A 01 N

The present search report has been drawn up for all claims

| Place of search | Date of completion of the search | Examiner |
|---|---|---|
| THE HAGUE | 09-02-1988 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)